# EUROPÄISCHE PATENTSCHRIFT

(11) **EP 2 176 056 B1**
(45) Veröffentlichungstag und Bekanntmachung des Hinweises auf die Patenterteilung: **05.08.2015**
(21) Anmeldenummer: 08736231.5
(22) Anmeldetag: 15.04.2008
(51) Int. Cl.: B29C 70/24, B32B 37/22

(54) **VERBESSERTE STUMPFSTOSSVERBINDUNGEN FÜR KERNWERKSTOFFE**
IMPROVED BUTT JOINT CONNECTIONS FOR CORE MATERIALS
SOUDURES BOUT À BOUT AMÉLIORÉES POUR MATÉRIAUX D'ÂME

(30) Priorität: 13.07.2007 DE 102007033120
(43) Veröffentlichungstag der Anmeldung: 21.04.2010
(73) Patentinhaber: Evonik Röhm GmbH, 64293 Darmstadt (DE)
(72) Erfinder: ROTH, Alexander, 64347 Griesheim (DE)
(86) Internationale Anmeldenummer: PCT/EP2008/054539
(87) Internationale Veröffentlichungsnummer: WO 2009/010316

(56) Entgegenhaltungen:
- EP-A1- 1 533 433
- WO-A-2007/012353
- FR-A- 2 837 743
- US-A- 5 935 680
- US-A1- 2002 014 302

## Beschreibung

### Gebiet der Erfindung

Der Erfindung liegt die Aufgabe zu Grunde, die mechanischen Eigenschaften von Stumpfstoßverbindungen in Kernverbund-Strukturen durch Einbringen von Armierungselementen in Dickenrichtung der Kernverbund-Struktur (z-Richtung) zu verbessern. Die Erfindung kann zur Herstellung von Kernverbunden für Anwendungen aus der Luft- und Raumfahrt sowie aus dem Schiffsbau, Kraftund Schienenfahrzeugbau, Energieanlagenbau, und Sportgerätebau verwendet werden.

### Stand der Technik

Für verschiedene Anwendungen werden Polymethacrylimidschäume mit faserverstärkten Schichten versehen, um Verbundwerkstoffe mit hervorragenden Eigenschaften zu erhalten. Diese Verbundwerkstoffe werden unter anderem zur Herstellung von Rotorblättern verwendet (US 5547629). Weiterhin ist der Verbund mit gängigen Thermoplasten beschrieben, wie etwa eine Laminierung von Polymethacrylimid-Schaumstoffen mit Polymethylmethacrylat (EP 736 372). Eine weitere Anwendung von Polymethacrylimidschäumen gelingt durch den Einbau leitfähiger Partikel im den Schaum, wodurch dieser zur Absorption elektromagnetischer Strahlung verwendet werden kann (DE 38 264 69 A1). Auch Anwendungen für die Automobilindustrie sind beschrieben (JP 63315229 A2). Weitere relevante Patente sind auch DE 3304882 A, GB 1547978 A, DE 2822881, DE 2235028 und DE 2114524.

In EP 1 533 433 ist eine Verstärkung von Stumpfstoßverbindungen beschrieben, bei denen zum einen die beiden Bauteilenden unterschiedliche Kantengeometrien aufweisen und zum anderen durch mit einem Klebstoff zu füllenden Ritzen an der Fügestelle verstärkt werden. Eine solche Methode führt jedoch genauso wie zusätzlich in EP 1 533 433 offenbarte, gleichmäßig über das Bauteil verteilte Bolzen zu einer enormen Gewichtszunahme des Leichtbauwerkstoffs.

### Aufgabe

Bei der Herstellung von Bauteilen aus Verbundwerkstoffen tritt häufig das Problem auf, daß die Kernmaterialen (Schaumstoffe, beispielsweise Schaumstoffe des Typs Rohacell^{®}, erhältlich bei der Röhm GmbH oder auch andere Schaumstoffe, wie beispielsweise Schaumstoffe aus Poylvinylchlorid (PVC) oder PU) nicht in den erforderlichen oder gewünschten Dimensionen zur Verfügung stehen. Für ein Seitenleitwerk eines modernen Großraumverkehrsflugzeugs wären beispielsweise Stücke von ca. 6 m X 5 m erforderlich, aus herstellungstechnischen Gründen können aber Schaumstoffplatten nur in kleineren Abmessungen hergestellt werden.

Neben der Notwendigkeit, Kernwerkstoffe in den geforderten Abmessungen zur Verfügung zu stellen, besteht das Erfordernis, Verstärkungen in das Verbundbauteil einzubauen, die geeignet sind, die Ausbreitung von Rissen im dem Schaumstoff zu stoppen. Diese Funktion ist besonders wichtig, da die Risse aufgrund der undurchsichtigen Deckschicht von außen nicht erkannt werden können.

Im Bereich von Fügeverbindungen, wie z. B. Stumpfstoßverbindungen (engl. core junction) treten aufgrund der Steifigkeitssprünge Spannungskonzentrationen im Bereich der Fügestellen auf, die die Belastbarkeit verringern können. An den Fügestellen können gleiche oder verschiedene Kernmaterialien aufeinandertreffen.

Es bestand die Aufgabe, eine verbesserte Stumpfstoßverbindung zu entwickeln.

### Lösung

Gelöst werden die vorstehend diskutierten Aufgaben sowie weitere nicht einzeln genannte, jedoch ohne weiteres für den Fachmann aus der einleitenden Diskussion ableitbare Aufgaben durch eine Stumpfstoßverbindung mit allen Merkmalen des unabhängigen Produktanspruchs. Bevorzugte Ausführungsformen der erfindungsgemäßen Folie sind Gegenstand der auf den unabhängigen Produktanspruch bezogenen abhängigen Ansprüche. Ein Verfahren zur Herstellung der erfindungsgemäßen Verbindung wird im unabhängigen Anspruch der Verfahrenskategorie unter Schutz gestellt. Bevorzugte Verfahrensmodifikationen entnimmt man den abhängigen Verfahrensansprüchen. Die Aufgabe wird dadurch gelöst, dass im Bereich der Stumpfstoßverbindungen von Kernverbunden Armierungselemente in Dickenrichtung eingebracht werden. Hierbei können unterschiedliche oder gleiche Kernwerkstoffe oder andere Materialien stumpf gestoßen werden.

### Durchführung der Erfindung

Die Armierungselemente können im Übergangsbereich des Kemmaterials mit der geringeren und/ oder mit der höheren Dichte bzw. Steifigkeit eingebracht werden (siehe Bild 1). Als Armierungselemente können beispielsweise Kohlefaserstäbe verwendet werden. Die Armierungselemente können zusätzlich die beiden Deckschichten durchsetzten, um z. B. die Schäl-, Impaktund Rissfortschrittseigenschaften zu verbessern, wodurch eine schadenstolerantere Stumpfstoßverbindung und gesamte Sandwich-Struktur entsteht. Die Armierungselemente können mit Hilfe von konventionellen Näh- oder Tuftingverfahren, Pinning-Verfahren nach dem Aztex-Prinzip oder TFC-Prinzip nach Airbus in das Kernmaterial oder Kernverbund-Struktur eingebracht werden.

Durch das Einbringen der Armierungselemente in den Kernwerkstoff kann einerseits der Steifigkeitssprung verringert werden, wodurch die Spannungskonzentrationen reduziert werden können, und zum anderen werden die mechanischen Eigenschaften, wie z. B. Zug-, Druck-, Schub- und Schäleigenschaften erhöht. Diese positive Beeinflussung führt dazu, dass sowohl die statische als auch die zyklische Festigkeit von Stumpfstoßverbindungen gesteigert werden können.

Zusätzlich können die Armierungselemente als Riß-Stopp-Konzepte wirken, wodurch verhindert werden kann, dass ein Riß von einer Seite des Stumpfstoßes zur anderen Seite ungehindert fortschreiten kann.

### Ergebnisse:

- Die Gewichtszunahme des Bauteils durch die Verstärkungen beträgt ca. 7%. Dieses lässt sich jedoch weiter reduzieren durch Einsatz von z. B. ROHACELL^{®} RIMA anstelle von ROHACELL^{®}WF, sodaß sich insgesamt eine Gewichtsersparnis ergibt.
- Erhöhte statische Schubfestigkeit von ca. 26%,
- Erhöhte zyklische Schubfestigkeit,
- Länger Lebensdauer.

### Herstellung der Rohacell^{®} - Schaumstoffe

Die für das Verfahren der Erfindung relevanten Kernschichten weisen Poly(meth)acrylimidschaum auf.

Die in Klammern gesetzte Schreibweise soll ein optionales Merkmal kennzeichnen. So bedeutet beispielsweise (Meth)acryl Acryl, Methacryl und Mischungen aus beiden.

Die aus den erfindungsgemäßen Zusammensetzungen erhältlichen Poly(meth)acrylimid-Schaumstoffe weisen wiederkehrende Einheiten auf, die durch Formel (I) darstellbar sind, 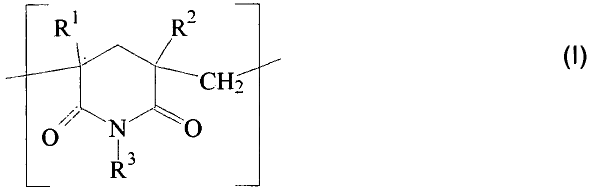 worin
R¹ und R² sind gleich oder verschieden und können Wasserstoff oder eine Methylgruppe bedeuten und R³ kann Wasserstoff oder ein Alkyl- oder Arylrest mit bis zu 20 Kohlenstoffatomen bedeuten.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimid-Schaumstoffs.

Die Herstellung von Poly(meth)acrylimid-Hartschaumstoffen ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) offenbart.

So können sich die Einheiten der Strukturformel (I) unter anderem beim Erhitzen auf 150°C bis 250°C aus benachbarten Einheiten der (Meth)acrylsäure und des (Meth)acrylnitrils durch eine cyclisierende Isomerisierungsreaktion bilden (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30°C bis 60 °C mit Nacherhitzung auf 60°C bis 120 °C erzeugt, das dann durch Erhitzen auf ca. 180°C bis 250 °C durch ein enthaltenes Treibmittel aufgeschäumt wird (siehe EP-B 356 714).

Hierzu kann beispielsweise zunächst ein Copolymerisat gebildet werden, welches (Meth)acrylsäure und (Meth)acrylnitril vorzugsweise in einem Molverhältnis zwischen 1 : 3 und 3 : 1 aufweist.

Darüber hinaus können diese Copolymerisate weitere Monomereinheiten enthalten, die sich beispielsweise aus Estern der Acryl- oder Methacrylsäure, insbesondere mit niedrigen Alkoholen mit 1 - 4 C-Atomen, wie beispielsweise Methanol, Ethanol, Propanol, Isopropanol, n-Butanol, iso-Butanol oder tert-Butanol, Styrol und Styrolderivate, wie beispielsweise α-Methylstyrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Als weitere Monomere können in ebenfalls bekannter Weise geringe Mengen an Vernetzern, wie z. B. Allylacrylat, Allylmethacrylat, Ethylenglycoldiacrylat oder -dimethacrylat oder mehrwertige Metallsalze der Acryl- oder Methacrylsäure, wie Magnesium-Methacrylat vorteilhaft verwendet werden. Die Mengenanteile dieser Vernetzer liegen häufig im Bereich von 0,005 Gew.-% bis 5 Gew.-%, bezogen auf die Gesamtmenge an polymerisierbaren Monomeren.

Des weiteren können Metallsalzzusätze verwendet werden, die vielfach rauchgasmindernd wirken. Hierzu gehören unter anderem die Acrylate oder Methacrylate der Alkali- oder Erdalkalimetalle oder des Zinks, Zirkons oder Bleis. Bevorzugt sind Na-, K-, Zn-, und Ca-(Meth)acrylat. Mengen von 2 bis 5 Gewichtsteile der Monomeren bewirken eine deutliche Minderung der Rauchgasdichte bei der Brandprüfung gemäß FAR 25.853a.

Als Polymerisationsinitiatoren werden die an sich für die Polymerisation von (Meth)acrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-%, bezogen auf die Ausgangsstoffe, eingesetzt.

Günstig kann es auch sein, Polymerisationsinitiatoren mit unterschiedlichen Zerfallseigenschaften bezüglich Zeit und Temperatur zu kombinieren. Gut geeignet ist z.B. die gleichzeitige Verwendung von tert.-Butylperpivalat, tert.-Butylperbenzoat und tert.-Butylper-2-ethylhexanoat oder von tert.-Butylperbenzoat, 2,2-Azobisiso-2,4-dimethylvaleronitril, 2,2-Azobisisobutyronitril und Di-tert.-butylperoxid.

Die Polymerisation erfolgt vorzugsweise über Varianten der Substanzpolymerisation, wie beispielsweise das so genannte Kammerverfahren, ohne hierauf beschränkt zu sein.

Das Gewichtsmittel des Molekulargewichts *M̅_{w}* der Polymere ist vorzugsweise größer als 10⁶ g/mol, insbesondere größer als 3×10⁶ g/mol, ohne daß hierdurch eine Einschränkung erfolgen soll.

Zum Aufschäumen des Copolymerisats während der Umwandlung in ein imidgruppenhaltiges Polymer dienen in bekannter Weise Treibmittel, die bei 150°C bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Es können jedoch auch stickstofffreie Treibmittel wie Ameisensäure, Wasser oder einwertige aliphatische Alkohole mit 3 bis 8 C-Atomen, wie 1-Propanol, 2-Propanol, n-Butan-1-ol, n-Butan-2-ol, Isobutan-1-ol, Isobutan-2-ol, Pentanole und/oder Hexanole, verwendet werden. Die eingesetzte Treibmittelmenge richtet sich nach der gewünschten Schaumstoffdichte, wobei die Treibmittel im Reaktionsansatz üblicherweise in Mengen von ca. 0,5 Gew.-% bis 15 Gew.-%, bezogen auf die eingesetzten Monomeren, verwendet werden.

Des weiteren können die Vorprodukte übliche Zusatzstoffe enthalten. Hierzu gehören unter anderem Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Leitfähige Partikel, die eine elektrostatische Aufladung der Schaumstoffe verhindern, sind eine weitere Klasse von bevorzugten Zusatzstoffen. Hierzu gehören unter anderem Metall- und Rußpartikel, die auch als Fasern vorliegen können, mit einer Größe im Bereich von 10 nm und 10 mm, wie dies in EP 0 356 714 A1 beschrieben ist.

Ein ganz besonders bevorzugter einsetzbarer Polymethacrylimid-Schaumstoff kann beispielsweise durch folgende Schritte erhalten werden:
1. Herstellen einer Polymerisatplatte durch radikalische Polymerisation einer Zusammensetzung bestehend aus
   (a) einer Monomermischung aus 20 Gew.-% - 60 Gew.-% Methacrylnitril, 80 Gew.-% - 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
   (b) 0,5 Gew.-% - 15 Gew.-% eines Treibmittelgemisches aus Formamid oder Monomethylformamid und einem einwertigen aliphatischen Alkohol mit 3 - 8 Kohlenstoffatomen im Molekül
   (c) einem Vernetzersystem, welches besteht aus
      (c.1) 0,005 Gew.-% - 5 Gew.-% einer radikalisch polymerisierbaren vinylisch ungesättigten Verbindung mit mindestens 2 Doppelbindungen im Molekül und
      (c.2) 1 Gew.-% - 5 Gew.-% Magnesiumoxid gelöst in der Monomermischung
   (d) einem Initiatorsystem
   (e) üblichen Zusatzstoffen

2. Diese Mischung wird mehrere Tage bei 30 °C bis 45°C in einer aus zwei Glasplatten der Größe 50*50cm und einer 2,2cm dicken Randabdichtung gebildeten Kammer polymerisiert. Anschließend wird das Polymerisat zur PolymethacrylimidEndpolymerisation etwa 20h einem von 40°C bis 130°C reichenden Temperprogramm unterworfen. Die darauffolgende Schäumung erfolgt während einiger Stunden bei 200 °C bis 250°C. Polymethacrylimide mit hoher Wärmeformbeständigkeit können des weiteren durch Umsetzung von Polymethylmethacrylat oder dessen Copolymeren mit primären Aminen erhalten werden, die ebenfalls erfindungsgemäß einsetzbar sind. Stellvertretend für die Vielzahl an Beispielen für diese polymeranaloge Imidierung seien genannt: US 4 246 374, EP 216 505 A2, EP 860 821. Hohe Wärmeformbeständigkeit läßt sich hierbei entweder durch Einsatz von Arylaminen (JP 05222119 A2) oder durch die Verwendung von speziellen Comonomeren erreichen (EP 561 230 A2, EP 577 002 A1). All diese Reaktionen ergeben jedoch keine Schäume, sondern feste Polymere, die zum Erhalt eines Schaumes in einem separaten zweiten Schritt aufgeschäumt werden müssen. Auch hierfür sind in der Fachwelt Techniken bekannt.

Poly(meth)acrylimid-Hartschaumstoffe können auch kommerziell erhalten werden, wie beispielsweise Rohacell^{®} von Röhm GmbH, das in verschiedenen Dichten und Größen lieferbar ist.

Die Dichte des Poly(meth)acrylimidschaums liegt bevorzugt im Bereich von 20 kg/m³ bis 320 kg/m³, besonders bevorzugt im Bereich von 50 kg/m³ bis 110 kg/m³.

Ohne daß hierdurch eine Beschränkung erfolgen soll, liegt die Dicke der Kernschicht im Bereich von 1 mm bis 200 mm, insbesondere im Bereich von 5 mm bis 100 mm und ganz besonders bevorzugt im Bereich von 10 mm bis 70 mm.

Die Kernschicht kann im Innern zusätzlich weitere Schichten aufweisen. Allerdings wird im Verfahren der vorliegenden Erfindung ein Poly(meth)acrylimidschaum mit einer faserverstärkten Schicht verbunden. In besonderen Ausführungsformen des erfindungsgemäßen Verfahrens wird jedoch eine Kernschicht eingesetzt, die aus Poly(meth)acrylimidschaum besteht.

Als faserverstärkte Schicht kann jedes bekannte flächige Gebilde eingesetzt werden, das bei den zur Herstellung von Verbundwerkstoffen notwendigen Verarbeitungsparametem, wie Druck und Temperatur, stabil ist. Als faserverstärkte Schicht können auch Bahnen eingesetzt werden, die einen mehrschichtigen Aufbau aufweisen.

Hierzu gehören u.a. beispielsweise faserverstärkte Folien die Polypropylen, Polyester, Polyamid, Polyurethan, Polyvinylchlorid und/oder Polymethyl(meth)acrylat enthalten.

Die faserverstärkte Schicht kann auch durch Härtung von bekannten faseraufweisenden Harzen, beispielsweise Epoxidharze (EP-Harze), Methacrylatharze (MA-Harze), ungesättigte Polyesterharze (UP-Harze), Phenolharze, Isocyanatharze, Bismaleinimidharze und Phenacrylatharze (PHA-Harze) erhalten werden.

Als Faserverstärkung kommen unter anderem Kohlefasern, Glasfasern, Aramidfasern, Polypropylenfasern, Polyesterfasern, Polyamidfasern, Polyurethanfasern, Polymethyl(meth)acrylatfasern Polyvinylchloridfasern und/oder Metallfasern in Betracht.

Bevorzugt können beispielsweise Prepregs, zu denen auch SMCs (sheet molding compounds) gehören, eingesetzt werden, um auf der Kernschicht eine faserverstärkte Schicht zu erhalten. SMC und Prepregs sind mit härtbaren Kunststoffen vorimprägnierte Bahnen, meist Glasfasermatten, Glasfilamentgewebe oder Kohlefasern und/oder Aramidfasern aufweisende Rovings, die durch Warmpressen zu Formteilen oder Halbzeug verarbeitet werden können. Zu den einsetzbaren SMCs gehören insbesondere SMC-R (SMC mit willkürlich orientierten Fasern), SMC-O (SMC mit orientierten Fasern), SMC-CR (SMC mit Fasern, die teilweise orientiert sind), XMC (SMC mit netzförmiger Faserverstärkung) und HMC (SMC mit hohem Fasergehalt).

Diese Materialien sind an sich bekannt und beispielsweise in Ullmann's, Encyclopedia of Industrial Chemistry 5. Auflage, Stichwort "Fabrication of Polymer Composites").

Neben einer faserverstärkten Schicht können auch Schichten aus Metall durch das Verfahren der vorliegenden Erfindung besonders fest mit der Kernschicht verbunden werden. Hierzu gehören unter anderem dünne Folien oder Bleche aus Aluminium. Die Metallschicht kann allein oder zusammen mit einer faserverstärkten Schicht verwendet werden, um einen Verbundwerkstoff herzustellen. Besonders bevorzugte Metallschichten sind unter anderem sogenannte Aluminium-Prepregs.

Das Verbinden der Kernschicht mit der faserverstärkten Schicht oder der Metallschicht nach der Behandlung mit dem organischen Lösungsmittel ist abhängig von der Art der aufzubringenden Schicht. Entsprechende Verfahren sind an sich bekannt.

So können Verbundwerkstoffe, die einen Kern aus Poly(meth)acrylimidschaum und eine faserverstärkte Schicht oder eine Metallschicht aufweisen, im allgemeinen durch sog. Warmpressverfahren erhalten werden. Diese Verfahren sind in der Fachwelt weithin bekannt, wobei auch spezielle Ausführungsformen, wie beispielsweise Doppelbandpressen, SMC-Pressen und GMT-Pressen von der Erfindung erfaßt werden.

Zur weiteren Verfestigung des Verbundwerkstoffs kann die Kernschicht beim Warmpressen verdichtet werden. Hierzu können bei dem Preßvorgang Abstandshalter, sogenannte Anschläge, verwendet werden. Diese erleichtern die Einstellung eines erwünschten Verdichtungsgrades der Kernschicht, ohne daß hierdurch eine Beschränkung der Erfindung erfolgen soll.

Zur Verbesserung der Haftung kann auch ein Klebstoff eingesetzt werden, der nach Behandlung der Oberfläche mit dem organischen Lösungsmittel aufgetragen werden kann. Je nach Material der faserverstärkten Schicht ist dies jedoch nicht notwendig.

Zur Herstellung des Verbundwerkstoffs kann beispielsweise eine SMC- bzw. Prepreg-Schicht auf die entsprechend dimensionierte Schaumstoff-Platte innerhalb einer Form in der dem Gewicht angemessenen Menge aufgelegt und mit Preßdruck beaufschlagt werden.

Typische Arbeitsbedingungen, bei denen die Prepregs bzw. SMCs zu fließen und zu härten beginnen, sind Drücke von mehr als 1 N/mm² und Temperaturen im Bereich 60°C bis 180°C. Diese Parameter können auch als Stufengradient gefahren werden, um einen Wärmestau zu vermeiden. Die Preßdauer beträgt üblicherweise 5 Minuten - 6 Stunden, je nach Art der faserverstärkten Schicht. Ein besonders zweckmäßiger Bereich liegt zwischen 10 und 120 Minuten.

Darüber hinaus können, die zuvor erwähnten Harze und Faserverstärkungen auch manuell auf den Poly(meth)acrylimidschaum aufgetragen werden. Hierbei werden abwechselnd Harzschichten und Faserbahnen aufgelegt. Nach dem Aufbringen der faserverstärkten Harzschicht wird das Harz auf bekannte Weise gehärtet. Entsprechende Systeme können beispielsweise von M.u.H. von der Linden GmbH, Postfach 100543, D- 46465 Wesel/ Rhein unter dem Namen West System erhalten werden.

Vorzugsweise liegt die Dicke der Deckschicht im Bereich von 0,1 bis 100 mm, bevorzugt im Bereich von 0,5 bis 50 mm und ganz besonders bevorzugt im Bereich von 1 bis 5 mm.

### Erläuterung der Figuren, Bezugszeichenliste

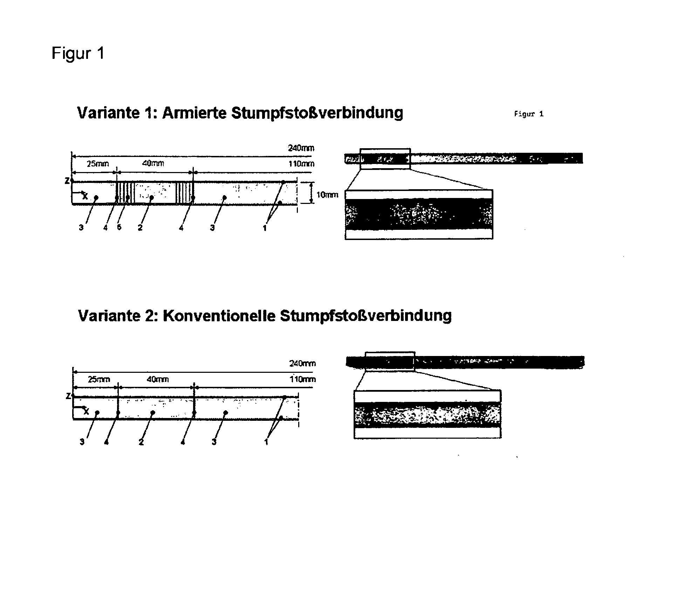

Figur 1 zeigt den Aufbau einer armierten Verbindung.

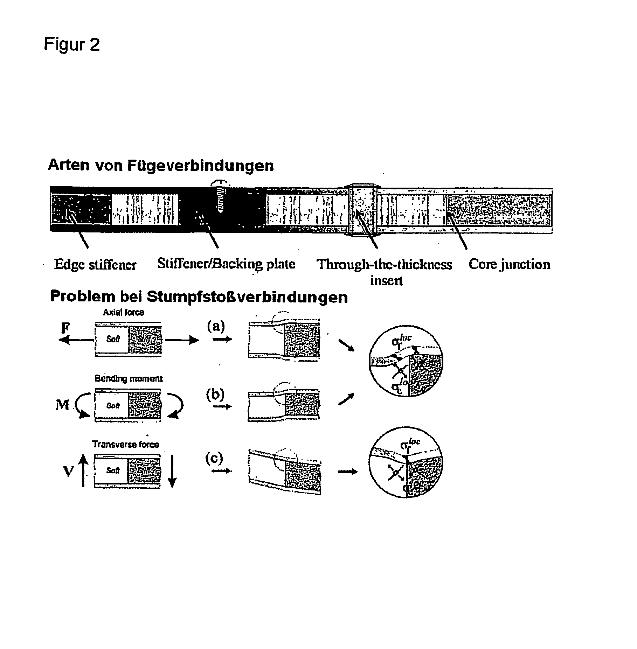

Figur 2 zeigt die üblichen Kräfte und Versagensbilder bei nicht-armierten Stumpfstoßverbindungen.

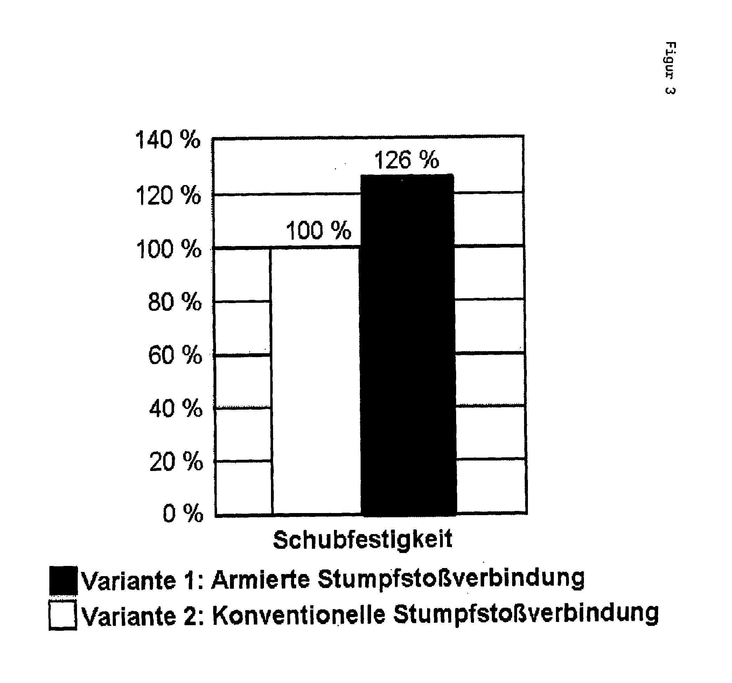

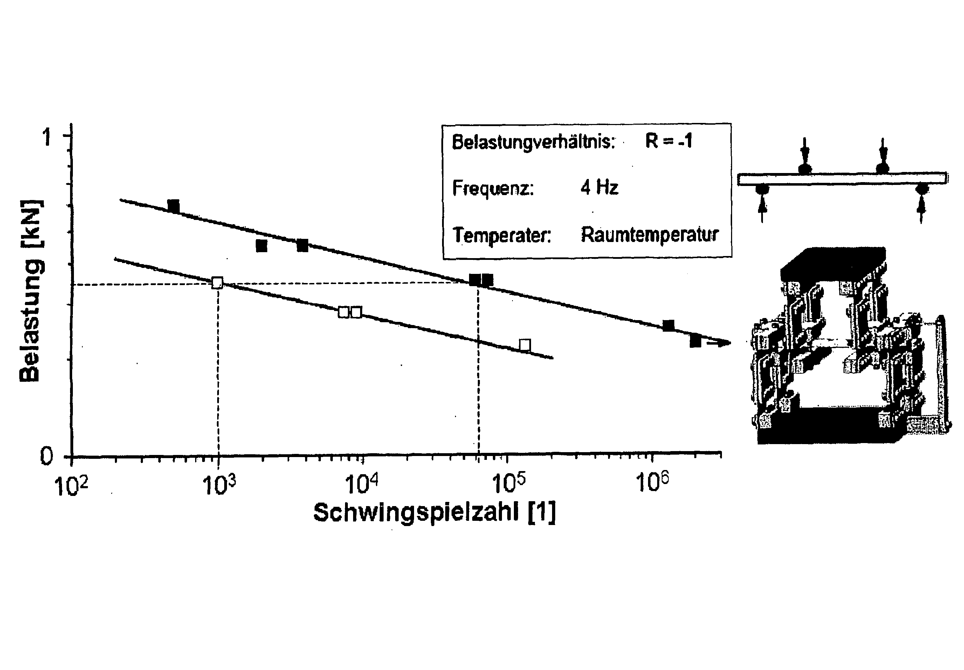

Figur 3 zeigt die Verbesserung durch die erfindungsgemäße Verstärkung der Stoßfuge.

### Bezugszeichenliste:

| **Index** | **Bezeichnung** | | **Anmerkung** |
|---|---|---|---|
| 1 | CF-EP-Prepreg | 977-2A-40-6KHTA-5H-370-T2-1270 | Deckschicht |
| 2 | ROHACELL 51 WF | 8-611-180; 49,5 Kg/m³ | Kernwerkstoff |
| 3 | ROHACELL 200 WF | 8-603-826; 223.2 Kg/m³ | Kernwerkstoff |
| 4 | FM 300 K | 2 Lagen/Klebefuge | Klebefolie |
| 5 | TORAYCA^{®} | T800HB 6000-40B batch-no: 062811 | Roving |

Die erfindungsgemäße Verstärkung kann beim Bau von Raumfahrzeugen, bei denen es in besonderer Weise auf leichte und doch stabile Verbindungen ankommt, verwendet werden, ferner beim Bau von Luftfahrzeugen, insbesondere von Großraumpassagier- oder Großraumfrachtflugzeugen, beim Bau von Schiffen oder Tragflächen- oder Luftkissenbooten und beim Bau von Landfahrzeugen, wie beispielsweise beim Bau von Eisenbahnfahrzeugen, angewendet werden. Eine weitere vorteilhafte Anwendung der erfindungsgemäßen Verwendung der verbesserten Stumpfstoßverbindung ist der Bau von Flügeln bei Windenergieanlagen.

## Patentansprüche

1. Verbesserte Stumpfstoßverbindung von gleichen oder verschiedenen Kernmaterialen in Kernverbund-Strukturen,
**dadurch gekennzeichnet, dass**
in einem der zu verbessernden Stumpfstoßverbindung (4) benachbarten Bereich der Kernmaterialien (2,3) ein oder mehrere Verstärkungselemente (5) in Dickenrichtung eingebracht sind.

2. Verbesserte Stumpfstoßverbindung nach Anspruch 1,
**dadurch gekennzeichnet, dass**
als Kernmaterialien (2,3) Rohacell^{®}- Schaumstoffe verwendet werden.

3. Verbesserte Stumpfstoßverbindung nach Anspruch 1,
**dadurch gekennzeichnet, dass**
als Verstärkungselemente (5) Kohlefaserwerkstoffteile verwendet werden.

4. Verwendung der verbesserten Stumpfstoßverbindungen nach einem der vorhergehenden Ansprüche beim Bau von Raum-, Luft-, Wasser und Landfahrzeugen.

5. Verwendung der verbesserten Stumpfstoßverbindungen nach einem der Ansprüche 1 bis 3 beim Bau von Windenergieanlagen.

6. Verwendung der verbesserten Stumpfstoßverbindungen nach einem der Ansprüche 1 bis 3 beim Bau von Sportgeräten.

## Claims

1. Improved butt joint of identical or different core materials in sandwich structures,
**characterized in that**
one or more reinforcement elements (5) is/are introduced in the direction of thickness within a region adjacent to the butt joint (4) to be improved within the core materials (2, 3).

2. Improved butt joint according to Claim 1,
**characterized in that**
Rohacell^{®} foams are used as core materials (2, 3).

3. Improved butt joint according to Claim 1,
**characterized in that**
carbon-fibre-material parts are used as reinforcement elements (5).

4. Use of the improved butt joints according to any of the preceding claims in the construction of spacecraft, aircraft, watercraft and land vehicles.

5. Use of the improved butt joints according to any of Claims 1 to 3 in the construction of wind turbines.

6. Use of the improved butt joints according to any of Claims 1 to 3 in the construction of sports equipment.

## Revendications

1. Soudure bout à bout améliorée de matériaux d'âme identiques ou différents dans des structures composites avec âme, **caractérisée en ce qu'**un ou plusieurs élément(s) de renforcement (5) est/sont inséré(s) dans la direction de l'épaisseur dans une région des matériaux d'âme (2, 3) proche de la soudure bout à bout à améliorer (4).

2. Soudure bout à bout améliorée selon la revendication 1, **caractérisée en ce que** l'on utilise comme matériaux d'âme (2, 3) une mousse Rohacell^{®}.

3. Soudure bout à bout améliorée selon la revendication 1, **caractérisée en ce que** l'on utilise comme éléments de renforcement (5) des pièces en matériau en fibres de carbone.

4. Utilisation des soudures bout à bout améliorées selon l'une quelconque des revendications précédentes dans la construction de véhicules spatiaux, aériens, maritimes ou terrestres.

5. Utilisation des soudures bout à bout améliorées selon l'une quelconque des revendications 1 à 3 dans la construction d'installations d'énergie éolienne.

6. Utilisation des soudures bout à bout améliorées selon l'une quelconque des revendications 1 à 3 dans la construction d'engins de sport.
